# EUROPEAN PATENT APPLICATION

(11) **EP 1 658 802 A2**
(43) Date of publication of application: **24.05.2006**
(21) Application number: 05110929.6
(22) Date of filing: 18.11.2005
(51) Int. Cl.: A47L 15/24, A47L 15/18, A47L 15/20, B08B 3/02

(54) **Apparatus for washing objects in a washing tunnel**

(30) Priority: 19.11.2004 IT TO20040816
(71) Applicant: R.E.A. s.n.c. di Sassi e Baudin & C., 10028 Trofarello (Torino) (IT)
(72) Inventor: Sassi, Stefano, 10024 Moncalieri (Torino) (IT)
(74) Representative: Robba, Pierpaolo

(57) **Abstract**

Apparatus (1) for washing objects such as baking tins, comprising a washing chamber (15), inside of which the baking tins are washed with a washing fluid sprayed through opposite nozzles (25). A transport device transports said baking tins through said washing chamber (15), and the opposite nozzles (25) are connected to a displacement device (27) that allows the oscillation thereof, so that the jets of washing fluid sprayed from said oscillating nozzles (25) impinge on the baking tin so as to pass several times on the same point, increasing thereby the efficiency of the washing treatment.

## Description

### Field of the Invention

The present invention relates to an apparatus for washing objects in a washing tunnel to be used, preferably, in the food industry.

In particular, the present invention relates to an automated apparatus in a line for washing objects such as kitchen baking tins, comprising a tunnel-like structure through which the objects are washed while moving forward on a transport line.

### Background art

Automated in-line apparatuses or tunnels for continuous washing of objects are used for example in the food industry field for washing baking tins and similar containers used during the production-, baking- and transport phases of the foodstuff products, like those described, as an example, in US4323091, US3103936, GB1027309 and EP0572097.

Said washing tunnels for containers such as baking tins and the like, are provided with a transport line by means of which the baking tins are passed through at least one washing chamber. Moreover the known tunnels generally comprise a rinsing phase and a drying phase carried out in special different chambers. In the washing chamber, the baking tins that are moving forward on the transport line are hit by jets of warm washing fluid (water or a water-detergent solution), warmed through a heat exchanger using combustion gas (like in the apparatuses described in US4323091 and US3103936) or steam generated separately (like in the apparatus described in GB1027309) as a heat source. After washing, the rinsing phase follows, carried out by subjecting the baking tins to warm or cold water jets. Like described as an example in US4323091, the baking tins can be finally dried with air jets in order to remove the water drops from the surface of the baking tins, with a following treatment with warm air thereafter.

In DE19508840 an automated washing apparatus for baking tins, confectionery plates and the like is described, in which steam is used as washing fluid.

The above described washing tunnels can be inserted directly after the production line, so that the baking tins and the trays are washed just after they have been used and with no need of being conveyed outside the production line. Using such automated in-line systems is regarded advantageous since the pressure of warm fluid jets is able to directly melt and remove the rests of foods, making both the soaking phase and a further brushing phase superfluous, said phases being otherwise necessary in off-line apparatuses for effectively removing the dirt.

One of the main problems to be overcome in designing a known washing tunnel, such as the apparatuses described in US4323091 and US3103936, is due to the fact that, for efficiently washing the baking tins, it is often necessary to carry out several washing cycles one after another, and this need clearly implies wasting energy and time.

Since the whole washing of the baking tins, comprising dissolving and removing the dirt thereafter, is carried out with washing fluid jets, the efficiency of the whole process is clearly and closely related to the efficiency of washing jets.

### Summary of the invention.

An object of the present invention is therefore avoiding the aforesaid drawback by providing an apparatus for washing objects, such as baking tins, in a washing tunnel, ensuring the maximum washing efficiency while keeping the same stay time of the objects in the apparatus as that of currently known systems.

This and other objects are achieved with an apparatus for washing objects conveyed in a tunnel according to the invention.

Advantageouly, according to a preferred embodiment, thanks to one or more nebulizing nozzles arranged on a movable arm oscillating between two positions, the discharged jets of washing fluid discharged from such nozzles act on the baking tin passing more times on the same point while the baking tin crosses the washing area. Consequently the effective treating time is increased, as well as the possibility to insist on the points where the dirt gathers in greater amount.

### Brief description of the Drawings

A preferred embodiment of the invention, given as a non-limiting example, will be described in the following detailed description, with reference to the enclosed figures, in which:
Figure 1 is a side view of the assembly of the apparatus for washing baking tins according to the invention;
Figure 2 is a partial perspective view of the device for moving the nozzles of the washing apparatus of Figure 1.

### Detailed description

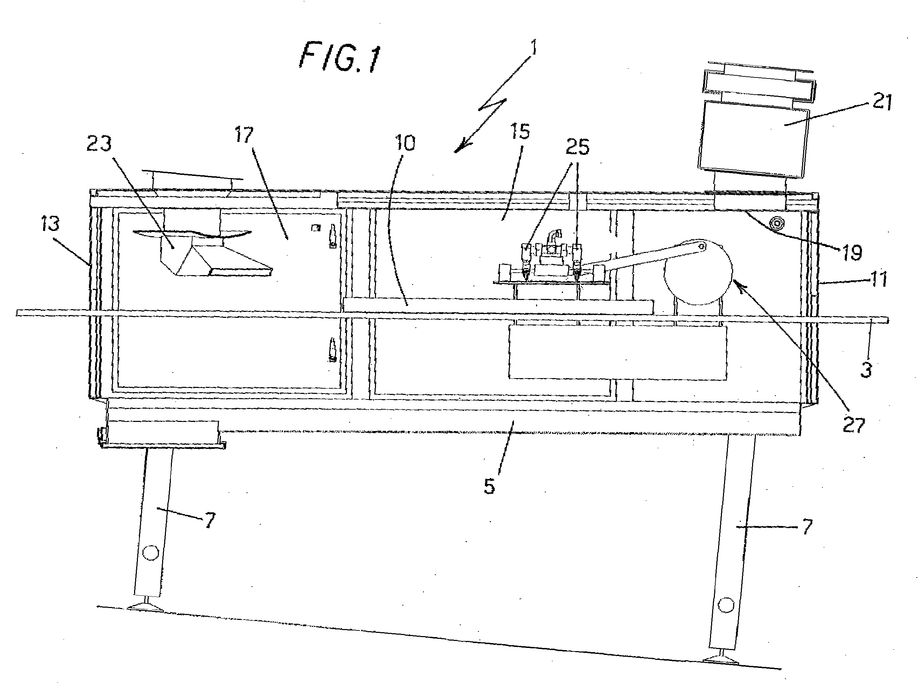

Referring to Figure 1, the apparatus 1 for washing baking tins according to the invention is shown, comprising for example a rectilinear support structure 5, provided with a plurality of legs 7 and an advancing plane 3, on which the treating rooms are arranged one after another, so as to provide the apparatus 1 with a modular "tunnel-like" structure. On said advancing plane 3 for example a transport line is provided using, for example, a conveyor belt or a chain driven, for example, by an electric motor (not shown).

In particular the apparatus 1 comprises, as an example, an inlet opening 11, through which the baking tins 10 to be processed are introduced, and an outlet opening 13, from which said baking tins 10 come out when the treatment is completed.

In the preferred embodiment the apparatus 1 further comprises a washing chamber 15 and, after that, a drying chamber 17.

The washing chamber 15 comprises nozzles 25, for example nebulising nozzles of known type, from which jets of fluid -generally hot- are discharged, for example steam at a higher temperature than 100°C; the jets blow against the baking tin 10 moving forward through said washing chamber 15. The washing chamber 15 further comprises, in the preferred embodiment, a suction inlet 21 for evacuating the steam produced during the washing treatment.

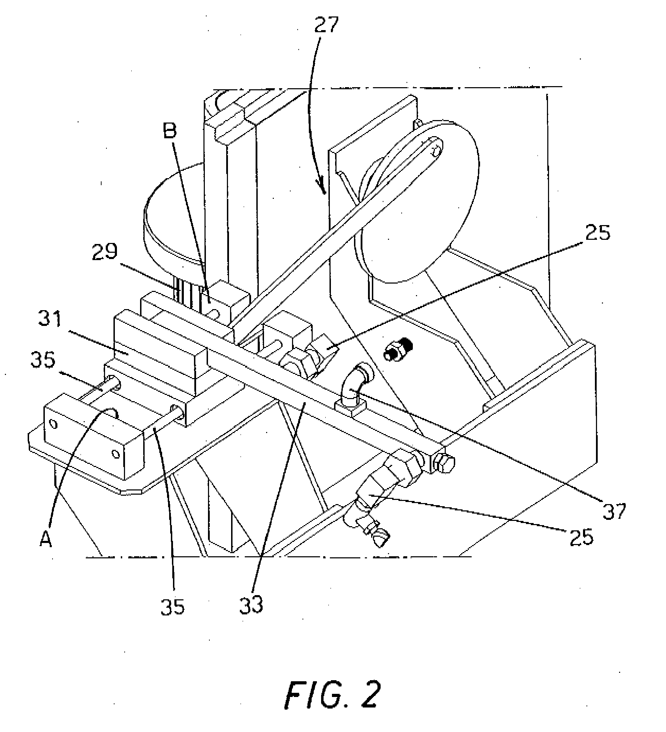

As shown in detail in Figure 2, the nozzles 25 are mounted on an arm 33 (in the shown example two nozzles are shown but, as it will appear clearly to a technician in the field, the nozzle number can range from one nozzle only to a plurality of nozzles), which in its turn is mounted on a carriage 31 that can oscillate on a horizontal plane between two end positions A and B along a pair of guides 35. The arm 33 further comprises an inlet opening 37 for introducing the washing fluid that, subsequently, is discharged under pressure from said nozzles 25.

The oscillation of said carriage 31, and therefore of said nozzles 25, is obtained, as an example, by means of a crank-type displacement device 27, which in its turn is driven by a motor 29. Thanks to the displacement device 27, the nozzles 25 make a predetermined number of oscillations, for example in the same direction of the forward movement of the baking tin. This movement, that is equivalent to a reciprocating movement relative to a baking tin that advances through the washing chamber 15, causes each point of the baking tin to be subjectet several times to the action of the washing fluid. Advantageously, the frequency of the oscillations can be suitably controlled acting on the motor 29, according to the degree of dirt (more or less intense treatment) or according to the dimensions and to the number of baking tins to be processed.

According to an alternative embodiment, the oscillation direction of nozzles 25 can be different from the forward movement direction of the baking tins, for example perpendicular relative to it.

The drying chamber 17 is arranged after the washing chamber 15 and comprises one or more forced suction inlets or filtered air jets 23.

The washing of the objects, for example of the baking tins, is carried out in the following way.

Reverting to Figure 1, the washing fluid discharged from said nebulizing nozzles 25 is directed against a baking tin 10 while the latter passes by. In prior art washing apparatuses the duration and, therefore, the effectiveness of the treatment depend not only on the number and on the direction of the jets, but also and mainly on the speed at which said baking tin crosses said washing chamber 15 (that is equivalent to say on the time of exposure of the baking tin to washing jets). On the contrary in the apparatus 1 according to the invention the effectiveness of the washing treatment is remarkably and advantageously increased thanks to the oscillating movement of said nozzles 25.

When the washing treatment is over, the baking tins reach the drying chamber 17, inside of which they are treated with one or more forced suction inlets adherent to the baking tin, or with filtered air jets 23.

Since the refluent washing liquid and the dirt rests fall partly on a suitable collecting tub (not shown) and partly on the walls of the chambers, it is envisaged that apparatus 1 according to the invention is accessible for ordinary cleaning and maintenance operations.

Thanks to the washing apparatus 1 according to the invention, the baking tins reach the output opening 13 perfectly washed and dry.

According to an alternative embodiment of the invention, in case the washing requirements makes it necessary to use detergents to be mixed with the washing fluid, a further washing/rinsing chamber (not shown) can advantageously be provided after the washing chamber 15 and, hence, before the drying chamber 17, inside of which the baking tins can further be washed with jets of clean water. It is clear that, when necessary, also such rinsing jets can be provided with a displacement device 27 similar to the one previously described for the nebulizing nozzles (25).

Moreover, according to a further embodiment of the invention, the number and the orientation direction of the nebulizing nozzles 25 on a same arm 31 can be various.

According to a further embodiment of the invention, additional nozzles 25 can be provided for further displacement device 27. If necessary such displacement device 27 can be oriented in different directions from each other, so as to have at one's disposal a pool of nozzles 25 acting at the same time on the baking tin oscillating in several directions.

As it is clear from the previous description, the structure of the washing apparatus 1 for baking tins according to the invention is extremely simple and easy to be made. Thanks to the simplicity of the displacement device of the nebulizing nozzles according to the invention, providing the introduction thereof inside the washing apparatus do not involve excessive costs and labour.

From the previous description it is clear that the apparatus according to the invention achieves the appointed objects since, thanks to the nozzles arranged on an oscillating mobile arm, the efficiency of the washing treatment is remarkably increased simply by subjecting several times the different points of the baking tin to the action of the washing fluid without increasing the time necessary for the baking tin to cross the washing chamber and with no need of heavy modifications to the structure or of interfering with the usual operation parameters of the apparatus.

Obvious modifications or variations are possible to the previous description as regards dimensions, shapes, materials, components, circuit elements, connections and contacts, as well as in the circuitry details and in the way of operating without departing from the scope of the invention, as specified in the following claims.

## Claims

1. Apparatus (1) for washing a plurality of objects in a washing tunnel for the food industry, comprising:
- a washing chamber (15), in which said plurality of objects is washed with a washing fluid sprayed through at least one nozzle of a plurality of nozzles (25);
- a transport device (3) arranged for transporting said plurality of objects through said washing chamber (15) by means of a first kind of movement;
**characterised in that**
said at least one nozzle (25) is mounted on at least a displacement device (27) that allows said at least one nozzle to perform a second kind of movement relative to said first kind of movement so that said plurality of objects undergoes repeated washings during said first kind of movement.

2. Apparatus according to claim 1, wherein said displacement device (27) comprises an arm (33), fixed in its turn to a carriage (31) that can oscillate on a substantially horizontal plane between two positions (A and B) along a pair of guides (35) so that said second kind of movement is an oscillating movement.

3. Apparatus according to claim 2, wherein said oscillating movement is carried out by means of a crank mechanism connection.

4. Apparatus according to claim 1, wherein said displacement device (27) is driven by a controllable electric motor so that said second kind of movement is controllable in a determined way.

5. Apparatus according to claim 1, wherein a plurality of displacement devices (27) is provided, comprising at least one respective mounted nozzle (25).

6. Apparatus according to claim 1 or 2, wherein said second kind of movement is made in the same direction of said first kind of movement.

7. Apparatus according to claim 1, wherein said washing fluid is steam at a temperature higher than 100°C.

8. Apparatus according to claim 1, wherein said washing chamber (15) comprises a suction inlet (21) for evacuating the steams generated during the washing treatment.

9. Apparatus according to claim 1, comprising a drying chamber (17) associated to said washing chamber (15), comprising rest removal devices for removing rests of the washing fluid from the surface of the baking tins.

10. Apparatus according to claim 9, wherein said rest removal devices comprise at least one forced suction inlet or at least one jet of filtered air (23).

11. Apparatus according to claim 9, wherein a further washing/rinsing chamber is provided after said washing chamber (15) and before said drying chamber (17), inside of which the baking tins can be further washed with clean water jets.

12. Apparatus according to any of the preceding claims, wherein said plurality of objects comprises objects chosen in a group comprising:
- containers used in production-, baking- or transport phases of foodstuff products;
- baking tins and the like.

13. Method for washing a plurality of objects in a washing tunnel for the food industry, said tunnel having a washing chamber (15) in which said plurality of objects is washed by means of a washing fluid sprayed through at least one nozzle of a plurality of nozzles (25); the method comprising the steps of:
- transporting said plurality of objects through said washing chamber (15) by means of a first kind of movement;
- moving said at least one nozzle by means of a second kind of movement;
- subjecting said plurality of objects to repeated washings during said phase of transport, depending on the combination of said first kind of movement with said second kind of movement.

14. Method according to claim 14, wherein said plurality of objects comprises objects chosen in a group comprising:
- containers used in production-, baking- or transport phases of foodstuff products;
- baking tins and the like.
